# EUROPÄISCHE PATENTSCHRIFT

(11) **EP 3 698 339 B1**
(45) Veröffentlichungstag und Bekanntmachung des Hinweises auf die Patenterteilung: **14.02.2024**
(21) Anmeldenummer: 18793371.8
(22) Anmeldetag: 15.10.2018
(51) Int. Cl.: G08G 1/01, G06F 16/909

(54) **VERFAHREN ZUM ERZEUGEN EINER SICHTWEITENSAMMLUNG UND SICHTWEITENSAMMELEINRICHTUNG**
METHOD FOR PRODUCING A COLLECTION OF VISIBILITY DATA AND DEVICE FOR COLLECTING VISIBILITY DATA
PROCÉDÉ DE GÉNÉRATION D'UNE COLLECTION DE PORTÉES VISUELLES ET DISPOSITIF DE COLLECTE DE PORTÉES VISUELLES

(30) Priorität: 19.10.2017 DE 102017218726
(43) Veröffentlichungstag der Anmeldung: 26.08.2020
(73) Patentinhaber: Continental Autonomous Mobility Germany GmbH, 85057 Ingolstadt (DE)
(72) Erfinder: BEIDERBECK, Martin, 92331 Parsberg (DE); PELLKOFER, Franz, 93152 Nittendorf (DE); GRAF, Friedrich, 93161 Sinzing (DE)
(74) Vertreter: Continental Corporation
(86) Internationale Anmeldenummer: PCT/EP2018/078032
(87) Internationale Veröffentlichungsnummer: WO 2019/076796

(56) Entgegenhaltungen:
- EP-A1- 2 945 138
- WO-A1-2016/151638
- DE-A1-102006 062 061
- DE-A1-102010 038 970
- DE-A1-102012 213 336
- DE-A1-102015 015 944
- DE-A1-102015 206 335
- US-A1- 2004 248 521
- US-A1- 2012 259 547

## Beschreibung

Die Erfindung betrifft ein Verfahren zum Erzeugen einer Sichtweitensammlung. Es wird eine aktuelle Position zumindest eines Kraftfahrzeugs bestimmt. Weiterhin betrifft die Erfindung eine Sichtweitensammeleinrichtung mit einer dementsprechend erzeugten Sichtweitensammlung.

Bekannt ist, dass aus Kartendaten Sichtweiten berechnet werden. Durch die Sichtweite wird dabei üblicherweise angegeben wie weit eine Fahrbahn einsehbar ist. Die Sichtweite kann beispielsweise durch Hindernisse beschränkt sein. Durch die aus den Kartendaten berechnete Sichtweite wird üblicherweise ein Überholassistent eines Kraftfahrzeugs unterstützt.

Nachteilig ist allerdings, dass aus den Kartendaten berechnete Sichtweiten nicht immer der Wirklichkeit entsprechen und somit der Überholassistent nur ungenau unterstützt wird.

DE 10 2015 015 944 A1 offenbart, dass Daten zyklisch oder auf Nachfrage aktualisiert werden.

In DE 10 2015 206 335 A1 ist ein Verfahren offenbart, bei dem Gefahrenstellen von Probefahrzeugen entdeckt und in einer Datenbank gespeichert werden. Dabei können Gefahrenstellen Stellen sein, bei denen die Sicht des Fahrers durch ein Hindernis beeinträchtigt wird.

WO 2016/151638 A1 beschreibt ein Verfahren, bei dem detektiert wird, an welchen Stellen die Sicht des Fahrers durch zu viel Sonnenlicht beeinträchtigt wird. Diese Stellen werden abhängig von Uhrzeiten und Jahreszeiten in einer Datenbank gespeichert.

In DE 10 2006 062 061 A1 ist ein Verfahren offenbart, bei dem eine Vorhersage über eine Bepflanzung berücksichtigt wird.

DE 10 2010 038 970 A1 beschreibt ein Verfahren, bei dem die Begrenzungen der Sichtweite durch Bebauung oder Bepflanzung in einer Karte angezeigt werden.

Es ist Aufgabe der vorliegenden Erfindung, ein Verfahren und eine Sichtweitensammeleinrichtung zu schaffen, bei welchem bzw. mit welcher eine Sichtweitensammlung genauer bereitgestellt werden kann.

Diese Aufgabe wird durch ein Verfahren und eine Sichtweitensammeleinrichtung gemäß den unabhängigen Ansprüchen gelöst.

Bei einem erfindungsgemäßen Verfahren wird eine Sichtweitensammlung erzeugt. Es werden folgende Schritte durchgeführt:
- Bestimmen einer aktuellen Sichtweite, welche beschreibt, wie weit ein Fahrer des Kraftfahrzeugs eine vor sich liegende Fahrbahn einsehen kann, an der aktuellen Position;
- Übermitteln der Sichtweite von dem Kraftfahrzeug an eine Sichtweitensammeleinrichtung;
- Erzeugen einer Sichtweitensammlung anhand der übermittelten Sichtweite;
- Vorherbestimmen einer erwarteten Sichtbehinderungsänderung an der Position anhand einer Bebauungsänderung, wobei die Bebauungsänderung von einer Datenbank abgerufen wird; und
- Anpassen der Sichtweite aus der Sichtweitensammlung anhand der vorherbestimmten Sichtbehinderungsänderung.

Der Erfindung liegt die Erkenntnis zu Grunde, dass eine mit Sensordaten eines Kraftfahrzeugs erzeugte Sichtweitensammlung genauer ist, als eine anhand von Kartendaten erzeugte bekannte Sichtweitensammlung. Weiterhin liegt der Erfindung die Kenntnis zu Grunde, dass sich Sichtweiten mit der Zeit ändern, beispielsweise durch natürliche Vegetation oder durch menschlichen Eingriff, und die Sichtweitensammlung deswegen regelmäßig angepasst werden sollte, um weiterhin eine genaue Auskunft über die Sichtweiten geben zu können. Die Änderung der Sichtweite kann durch die erwartete Sichtbehinderungsänderung vorherbestimmt werden. So kann beispielsweise anhand von Vorwissen bestimmt werden, zu welcher Jahreszeit oder Tageszeit sich eine Vegetation ändert. Gemäß der beanspruchten Erfindung wird anhand von Vorwissen bestimmt, wann eine Baustelle an einer bestimmten Position begonnen wird. Es kann dann davon ausgegangen werden, dass innerhalb einer vorherbestimmbaren Zeit ein Gebäude dort neu errichtet wird und somit eine Sichtbehinderungsänderung entsteht. Es kann aber beispielsweise auch sein, dass ein Gebäude abgerissen wird und eine Sichtbehinderungsänderung dadurch wegfällt oder die Baustelle aufgelöst wird.

Die aktuelle Sichtweite wird beispielsweise von einem Umfeldsensor des Kraftfahrzeugs bestimmt und dann von dem Kraftfahrzeug, insbesondere drahtlos, an die Sichtweitensammeleinrichtung, beispielsweise einen fahrzeugexternen Server, übermittelt. Die Sichtweitensammlung wird dann beispielsweise in der Sichtweitensammeleinrichtung anhand der übermittelten Sichtweite erzeugt. Die Sichtweitensammlung liegt dabei insbesondere als Datenbank vor. Aufgrund von Vorwissen, beispielsweise und nicht Teil der beanspruchten Erfindung einer bekannten vegetationszyklusabhängigen Sichtbehinderungsänderung wird die erwartete Sichtbehinderungsänderung an der Position vorherbestimmt. Mit dieser vorherbestimmten Sichtbehinderungsänderung wird dann die Sichtweite mit der Sichtweitensammlung angepasst.

In einer weiteren Ausprägung, die nicht Teil der beanspruchten Erfindung ist werden Sichtweiteninformationen mittels Algorithmen und Daten aus der Datenbank und weiteren Datenbanken erzeugt. Z.B erfolgt der Wuchs bestimmter Pflanzen nach Regeln, woraus Sichtbehinderung resultiert. Auch ist die Durchsichtigkeit im Winter je nach Belaubung vorhersehbar. Diese Regeln können in spezifischen Modellen abgebildet werden, die auch Daten aus Wetterdatenbanken benutzen. Damit kann die hochgeladene Datenmenge der Sensordaten reduziert werden. Auch können Daten aus anderen Datenbanken benutzt werden, z.B von Ämtern (digitales Kataster) oder anderen Sensorplattformen wie Drohnen. Damit entstehen stabilere und zuverlässigere Informationen, was für sicherheitsrelevante Vorgänge wie Überholen von großer Bedeutung ist. Die zu übertragende Datenmenge wird wirksam reduziert. Gebäude können als 3D Modelle hinterlegt sein, wobei je nach Fahrtrichtung die Sichtweite genauer bestimmt werden kann. Die Bestimmung kann auch durch Algorithmen, die am backend berechnet werden, erreicht werden.

Vorteilhaft ist auch, dass aus Kartendaten berechnete Sichtweiten validiert werden können. Bisher nicht erfasste Strecken können mit dem erfindungsgemäßen Verfahren auch nacherfasst werden.

Besonders vorteilhaft ist die Sichtweitensammlung mit der erhöhten Genauigkeit für eine Anwendung beim zumindest semiautonomen Fahren bzw. beim assistierten Fahren.

Als nicht Teil der beanspruchten Erfindung ist es vorgesehen, dass als die Sichtbehinderungsänderung eine Vegetationsänderung an der Position vorherbestimmt wird und die Sichtweite in der Sichtweitensammlung anhand der Vegetationsänderung angepasst wird. Die Vegetationsänderung kann beispielsweise bestimmt werden indem bekannte Vegetationszyklen ausgewertet werden. Es ist beispielsweise bekannt, dass Laubbäume im Frühjahr Blätter anlegen und im Herbst Blätter verlieren. Es ist beispielsweise auch bekannt, wann z.B. ein Maisfeld, welches als Sichtbehinderung vorliegen kann, über den gesamten Vegetationszyklus gesehen welche Höhe hat. So ist der Mais beispielsweise kurz nach der Aussaat und nach der Ernte meist keine Sichtbehinderung, während der Mais kurz vor der Ernte eine erhebliche Sichtbehinderung darstellen kann. Die bestimmte Vegetation, welche sich beispielsweise aktuell an der aktuellen Position befindet, kann beispielsweise auch durch Umfeldsensorik des Kraftfahrzeugs erfasst werden oder aber durch Fernerkundungsdaten oder aber schlicht aus Datenbanken ausgelesen werden. So ist es beispielsweise üblich, dass ein Landwirt zur Beantragung von Subventionszahlungen angibt, welche Pflanze in dieser Saison auf einem bestimmten Feld angebaut wird. Diese Daten können beispielsweise aus Datenbanken von beispielsweise EU-Behörden ausgelesen werden.

Durch die Berücksichtigung der Vegetationsänderung wird die Sichtweitensammlung genauer erzeugt.

Durch die Berücksichtigung der Vegetationsänderung wird die Sichtweitensammlung genauer erzeugt.

Gemäß der Erfindung ist vorgesehen, dass als Sichtbehinderungsänderung eine Bebauungsänderung an der Position vorherbestimmt wird und die Sichtweite in der Sichtweitensammlung anhand der Bebauungsänderung angepasst wird. Durch die Bebauungsänderung kann beispielsweise ein neu gebautes Gebäude oder aber ein abgerissenes Gebäude beschrieben werden. Die Bebauungsänderung kann aber beispielsweise auch eine Baumaßnahme am Straßennetz, wie beispielsweise eine neue Brücke oder aber eine neue Unterführung betreffen. Die Bebauungsänderung kann beispielsweise auch aus einer von der zuständigen Baubehörde bereitgestellten Datenbank abgerufen werden. So kann in der Datenbank beispielsweise auch regelmäßig der Baufortschritt oder aber zumindest ein Baubeginn und ein planmäßiges Bauenddatum angegeben sein. Anhand der Bebauungsänderung kann die Sichtweitensammlung mit genaueren Sichtweiten erzeugt werden.

Weiterhin ist es vorzugsweise vorgesehen, dass ein Qualitätswert für die Sichtweite bestimmt wird, welcher einen aktuellen Umfeldzustand des Kraftfahrzeugs während dem Bestimmen der Sichtweite beschreibt, und der Qualitätswert mit der Sichtweite in der Sichtweitensammlung abgespeichert wird. Der Qualitätswert gibt quasi eine Güte der bestimmten Sichtweite an. Der Qualitätswert umfasst beispielsweise eine Tageszeit, eine Helligkeit und/oder eine Witterung. So kann durch den Qualitätswert ein wetterabhängiger Faktor, beispielsweise Nebel, Regen, insbesondere Starkregen, Sonne und/oder Dämmerung zur späteren Korrektur der Sichtweite, beispielsweise im Kraftfahrzeug oder in der Sichtweitensammeleinrichtung, genutzt werden. Die spätere Korrektur ist insbesondere gleichbedeutend mit dem schon beschriebenen Anpassen der Sichtweite. Der Qualitätswert kann beispielsweise als Skalar vorliegen, welcher sich aus verschiedenen gewichteten Werten, welche den Umfeldzustand beschreiben, zusammensetzen.

Weiterhin vorzugsweise vorgesehen ist, dass die Sichtweite der Sichtweitensammlung abhängig von dem Qualitätswert durch eine weitere Sichtweite ersetzt wird. Die weitere Sichtweite ist dabei vorzugsweise eine jüngere Sichtweite als die Sichtweite in der Sichtweitensammlung. Die Sichtweite wird dann vorzugsweise nur durch die weitere Sichtweite ersetzt, falls die weitere Sichtweite einen Qualitätswert aufweist, welcher über einen Qualitätsgrenzwert ist. Es kann auch sein, dass beispielsweise der zeitliche Abstand zwischen dem Bestimmen der Sichtweite und dem Bestimmen der weiteren Sichtweite gewichtet wird und der Qualitätswert gewichtet wird. Durch eine Kombination des zeitlichen Abstands und des Qualitätswerts kann dann entschieden werden, ob die weitere Sichtweite die Sichtweite ersetzt. So kann es beispielsweise vorgesehen sein, lieber die ältere Sichtweite zu behalten, falls die jüngere Sichtweite einen deutlich niedrigeren bzw. schlechteren Qualitätswert aufweist.

Vorzugsweise ist es vorgesehen, dass die angepasste Sichtweite von der Sichtweitensammlung an ein weiteres Kraftfahrzeug übermittelt wird. So kann die angepasste Sichtweite beispielsweise von der Sichtweitensammeleinrichtung drahtlos, insbesondere mit einem Mobilfunknetz, an das weitere Kraftfahrzeug übermittelt werden. Das weitere Kraftfahrzeug kann dann die aufgrund der Anpassung genauere Sichtweite nutzen. So kann das weitere Kraftfahrzeug beispielsweise die angepasste Sichtweite für ein Fahrerassistenzsystem oder aber zum zumindest semiautonomen bzw. pilotierten Fahren nutzen.

Insbesondere ist es vorgesehen, dass die Sichtweitensammlung mit jeweiligen Sichtweiten von einem Fahrzeugschwarm mit mehreren Kraftfahrzeugen erzeugt wird. Durch das Erzeugen der Sichtweitensammlung mit dem Fahrzeugschwarm kann die Sichtweitensammlung schneller und genauer erzeugt werden. Die Fahrzeuge des Fahrzeugschwarms können beispielsweise untereinander vernetzt sein, aber zumindest sind die Fahrzeuge des Fahrzeugschwarms vorzugsweise mit der Sichtweitensammeleinrichtung gekoppelt oder sind zumindest dazu ausgebildet, die bestimmte Sichtweite an die Sichtweitensammeleinrichtung zu übermitteln.

Weiterhin ist es vorzugsweise vorgesehen, dass die Sichtweite in der Sichtweitensammlung mittels Maschinellem Lernen angepasst wird. Vorzugsweise wird die jeweilige Sichtweite durch den Fahrzeugschwarm an die Sichtweitensammeleinrichtung übertragen und dort mit Hilfe eines selbstlernenden Systems auf Basis von Datenanalysemethoden, beispielsweise Transformation, Modellierung oder auch Methoden des maschinellen Lernens oder der künstlichen Intelligenz wie beispielsweise neuronalen Netzen, SVM-Methoden (SVM - support vector machine), deep learning, KNN (künstliche neuronale Netze) oder Regression sowie Bildverarbeitungsmethoden anhand der Sichtbehinderungsänderung angepasst. Durch das Anpassen der Sichtweite mittels des Maschinellen Lernens kann die Sichtweite genauer angepasst werden und es können größere Datenmengen verarbeitet werden.

Die Erfindung betrifft auch eine Sichtweitensammeleinrichtung. Die Sichtweitensammeleinrichtung weist eine erfindungsgemäße Sichtweitensammlung auf.

Die Sichtweitensammeleinrichtung ist vorzugsweise als Server oder sogenanntes Backend ausgebildet.

Vorteilhafte Ausführungen des erfindungsgemäßen Verfahrens sind als vorteilhafte Ausführungen der Sichtweitensammeleinrichtung anzusehen.

Weitere Merkmale der Erfindung ergeben sich aus den Ansprüchen, den Figuren und der Figurenbeschreibung.

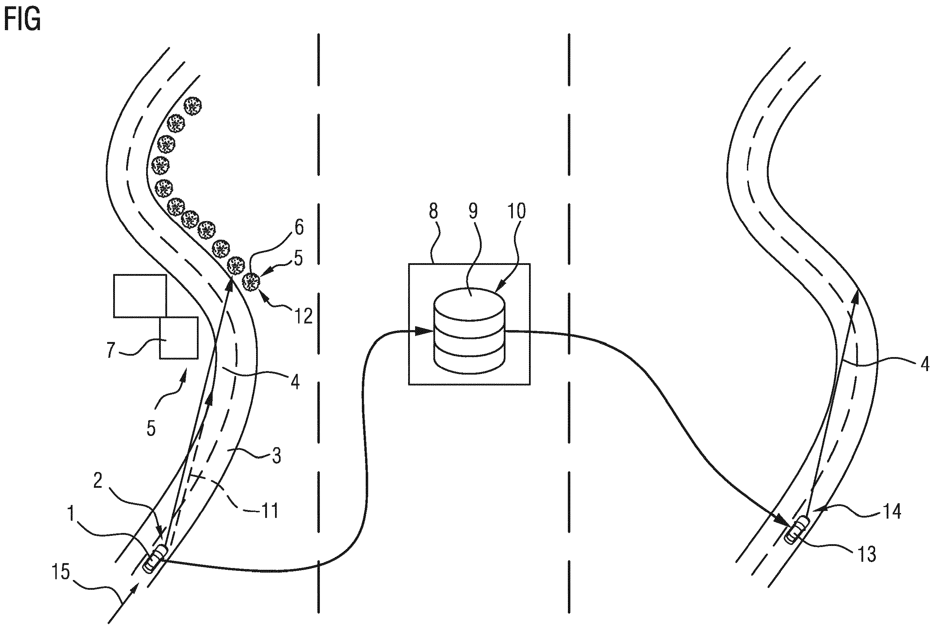

Ausführungsbeispiele der Erfindung werden nachfolgend anhand einer schematischen Zeichnung näher erläutert. Die Figur zeigt ein Ausführungsbeispiel eines erfindungsgemäßen Verfahrens zum Erzeugen einer Sichtweitensammlung.

Die Figur zeigt ein Kraftfahrzeug 1 an einer aktuellen Position 2. Das Kraftfahrzeug 1 befindet sich auf einer Fahrbahn 3.

Das Kraftfahrzeug 1 weist gemäß dem Ausführungsbeispiel zumindest einen Umfeldsensor, vorzugsweise eine Kamera, ein Radarsensor, ein Ultraschallsensor, ein LiDAR oder ein Laserscanner, auf. Insbesondere mittels dem Umfeldsensor bestimmt das Kraftfahrzeug 1 eine aktuelle Sichtweite 4. Durch die Sichtweite 4 wird beschrieben, wie weit ein Fahrer des Kraftfahrzeugs 1 die vor sich liegende Fahrbahn 3 einsehen kann. Die Sichtweite 4 kann beispielsweise mit einem Radarsensor bestimmt werden, indem anhand der Laufzeit des Radarsignals bestimmt wird, welche Distanz die Sichtweite 4 beträgt. Das Radarsignal wird beispielsweise von der Sichtbehinderung 5 zurückreflektiert und die Sichtweite 4 kann bestimmt werden. Die Sichtweite 4 beträgt beispielsweise 80 m oder 250 m. Die Sichtbehinderung 5 ist beispielsweise als Vegetation 6 oder Bebauung 7 ausgebildet.

Die aktuelle Position 2 wird vorzugsweise durch ein globales Navigationssatellitensystem (GNSS) bestimmt.

Das Kraftfahrzeug 1 bestimmt also die Sichtweite 4 an der Position 2 und übermittelt die Sichtweite 4, insbesondere zusammen mit der Position 2, und insbesondere zusammen mit der Orientierung des Kraftfahrzeugs 1, und insbesondere mit der Fahrtrichtung des Kraftfahrzeugs 1, an eine Sichtweitensammeleinrichtung 8. Die Sichtweitensammeleinrichtung 8 ist zumindest im Ausführungsbeispiel als Server oder sogenanntes Backend ausgebildet. Die Sichtweitensammeleinrichtung 8 kann dabei zentral oder als verteiltes System vorliegen.

Gemäß dem Ausführungsbeispiel wird in der Sichtweitensammeleinrichtung 8 eine Sichtweitensammlung 9 erzeugt. Die Sichtweitensammlung 9 liegt gemäß dem Ausführungsbeispiel als Datenbank vor. Die Datenbank ist vorzugsweise als relationale Datenbank ausgebildet, welche die Sichtweite 4 zusammen mit der Position 2 und weitere Meterdaten wie beispielsweise Erfassungszeit, einem Qualitätswert 10 und einem Erfassungsdatum abgelegt wird.

Abhängig von dem Qualitätswert 10 wird die Sichtweite 4 durch eine weitere Sichtweite 11 ersetzt. Dabei ist die weitere Sichtweite 11 gemäß dem Ausführungsbeispiel jünger als die Sichtweite 4. Ist der Qualitätswert 10 der weiteren Sichtweite 11 nun größer als ein Qualitätsschwellwert oder größer als der Qualitätswert 10 der Sichtweite 4, so wird die Sichtweite 4 mit der weiteren Sichtweite 11 ersetzt. Ist dies beispielsweise nicht der Fall, so wird die Sichtweite 4 nicht durch die weitere Sichtweite 11 ersetzt, sondern die weitere Sichtweite 11 wird beispielsweise verworfen oder anderweitig abgespeichert.

Gemäß dem Ausführungsbeispiel wird eine erwartete Sichtbehinderungsänderung 12 vorherbestimmt. Durch die Sichtbehinderungsänderung 12 wird beschrieben, wie sich die Sichtbehinderung 5, also beispielweise die Vegetation 6 oder die Bebauung 7 voraussichtlich ändert. Die Sichtbehinderungsänderung 12 kann also beispielsweise anhand einer Wahrscheinlichkeit einer zukünftigen Entwicklung der Vegetation 6 oder der Bebauung 7 vorhergesagt werden. Beispielsweise kann davon ausgegangen werden, dass ein Maisfeld als die Vegetation 6 kurz vor der Erntezeit im Spätsommer höher ist als kurz nach der Aussaat oder nach der Ernte. Auch bei der Bebauung 7 kann davon ausgegangen werden, dass eine Baustelle am Anfang noch ein niedrigeres Gebäude aufweist als dies beispielsweise am Ende der Bauphase der Fall ist. Bei einer Abrissphase ist es gegenteilig, so ist es beispielsweise üblich, dass das Gebäude von Zeit zu Zeit während der Abrissphase niedriger wird und damit die Sichtweite 4 wieder größer wird, da die Bebauung 7 dann nicht mehr als die Sichtbehinderung 5 vorliegt.

Anhand der erwarteten Sichtbehinderungsänderung 12 wird die Sichtweite aus der Sichtweitensammlung 9 angepasst bzw. korrigiert. Das Anpassen der Sichtweite kann beispielsweise in der Sichtweitensammeleinrichtung 8 erfolgen oder aber die Sichtweite 4 wird außerhalb der Sichtweitensammeleinrichtung 8 angepasst.

So wird die Sichtweite 4, insbesondere nach dem Anpassen durch die Sichtbehinderungsänderung 12, an ein weiteres Kraftfahrzeug 13 übermittelt. Das weitere Kraftfahrzeug 13 kann mit der Sichtweite 4 dann beispielsweise einen Überholvorgang 14 genauer durchführen, als dies ohne die Sichtweite 4 der Fall gewesen wäre.

Es kann auch sein, dass die Sichtweite 4 an das weitere Kraftfahrzeug 13 übermittelt wird und das Anpassen der Sichtweite 4 im weiteren Kraftfahrzeug 13 selbst erfolgt. Es kann auch sein, dass lediglich ein Korrekturwert, also die Sichtbehinderungsänderung 12 selbst an das weitere Kraftfahrzeug 13 übermittelt wird und die Sichtweite 4 von dem weiteren Kraftfahrzeug 13 vorhanden ist, so dass die Sichtweite 4 selbst nicht jedes Mal zum weiteren Kraftfahrzeug 13 übermittelt werden muss, sondern lediglich die Sichtbehinderungsänderung 12 übermittelt wird.

Gemäß dem Ausführungsbeispiel wird nicht nur eine Sichtweite bestimmt, sondern durch einen Fahrzeugschwarm 15 werden mehrere Sichtweiten an verschiedenen Positionen bestimmt. Diese Mehrzahl von Sichtweiten 4 wird dann an die Sichtweitensammeleinrichtung 8 übermittelt und dort der Sichtweitensammlung 9 hinzugefügt.

Gemäß dem Ausführungsbeispiel erfolgt das Anpassen der Sichtweite 4 anhand der Sichtbehinderungsänderung 12 mit Maschinellem Lernen. Es kann auch schon die Sichtbehinderungsänderung 12 durch Maschinelles Lernen bzw. anhand von Massendaten (big data) vorherbestimmt werden.

In der Sichtweitensammeleinrichtung 8 erfolgt dann beispielsweise ein map matching (Kartenabgleich), ein Lernen des Qualitätsschwellwerts oder ein Berechnen von Korrekturfaktoren bzw. ein Berechnen der Sichtbehinderungsänderung 12.

### Bezugszeichenliste

- 1: Kraftfahrzeug
- 2: aktuelle Position
- 3: Fahrbahn
- 4: Sichtweite
- 5: Sichtbehinderung
- 6: Vegetation
- 7: Bebauung
- 8: Sichtweitensammeleinrichtung
- 9: Sichtweitensammlung
- 10: Qualitätswert
- 11: weitere Sichtweite
- 12: Sichtbehinderungsänderung
- 13: weiteres Kraftfahrzeug
- 14: Überholvorgang
- 15: Fahrzeugschwarm

## Patentansprüche

1. Verfahren zum Erzeugen einer Sichtweitensammlung (9), bei welchem folgende Schritte durchgeführt werden:
- Bestimmen einer aktuellen Position (2) zumindest eines Kraftfahrzeugs (1);
- Bestimmen einer aktuellen Sichtweite (4), welche beschreibt wie weit ein Fahrer des Kraftfahrzeugs (1) eine vor sich liegende Fahrbahn (3) einsehen kann, an der aktuellen Position (2);
- Übermitteln der Sichtweite (4) von dem Kraftfahrzeug (1) an eine Sichtweitensammeleinrichtung (8);
- Erzeugen der Sichtweitensammlung (9) anhand der übermittelten Sichtweiten (4);
- Vorherbestimmen einer erwarteten Sichtbehinderungsänderung (12) an der Position (2) anhand einer Bebauungsänderung, wobei die Bebauungsänderung von einer Datenbank abgerufen wird; und
- Anpassen der Sichtweite (4) in der Sichtweitensammlung (9) anhand der vorherbestimmten Sichtbehinderungsänderung (12).

2. Verfahren nach Anspruch 1,
**dadurch gekennzeichnet, dass**
als die Sichtbehinderungsänderung (12) eine Bebauungsänderung an der Position (2) vorherbestimmt wird und die Sichtweite (4) in der Sichtweitensammlung (9) anhand der Bebauungsänderung angepasst wird.

3. Verfahren nach einem der vorhergehenden Ansprüche,
**dadurch gekennzeichnet, dass**
ein Qualitätswert (10) für die Sichtweite (4) bestimmt wird, welcher einen aktuellen Umfeldzustand des Kraftfahrzeugs (1) während dem Bestimmen der Sichtweite (4) beschreibt, und der Qualitätswert (10) mit der Sichtweite (4) in der Sichtweitensammlung (9) abgespeichert wird.

4. Verfahren nach Anspruch 3,
**dadurch gekennzeichnet, dass**
die Sichtweite (4) in der Sichtweitensammlung (9) abhängig von dem Qualitätswert (10) durch eine weitere Sichtweite (11) ersetzt wird.

5. Verfahren nach einem der vorhergehenden Ansprüche,
**dadurch gekennzeichnet, dass**
die angepasste Sichtweite (4) von der Sichtweitensammlung (9) an ein weiteres Kraftfahrzeug (13) übermittelt wird.

6. Verfahren nach Anspruch 5,
**dadurch gekennzeichnet, dass**
das weitere Kraftfahrzeug (13) einen Überholvorgang abhängig von der Sichtweite (4) durchführt.

7. Verfahren nach einem der vorhergehenden Ansprüche,
**dadurch gekennzeichnet, dass**
die Sichtweitensammlung (9) mit jeweiligen Sichtweiten (4) von einem Fahrzeugschwarm (15) mit mehreren Kraftfahrzeugen (1) erzeugt wird.

8. Verfahren nach einem der vorhergehenden Ansprüche,
**dadurch gekennzeichnet, dass**
die Sichtweite (4) in der Sichtweitensammlung (9) mittels maschinellem Lernen angepasst wird.

9. Verfahren nach einem der vorhergehenden Ansprüche,
**dadurch gekennzeichnet, dass**
die Sichtweite (4) in der Sichtweitensammlung (9) anhand von Regeln angepasst werden, die Daten aus Wetterdatenbanken benutzen.

10. Sichtweitensammeleinrichtung (8) mit einer Sichtweitensammlung (9), welche nach einem Verfahren gemäß einem der vorhergehenden Ansprüche erzeugt ist.

## Claims

1. Method for generating a visual range collection (9), in which the following steps are carried out:
- determining a current position (2) of at least one motor vehicle (1);
- determining a current visual range (4) which describes how far a driver of the motor vehicle (1) can see a roadway (3) ahead, from the current position (2);
- transmitting the visual range (4) from the motor vehicle (1) to a visual range collecting device (8);
- generating the visual range collection (9) on the basis of the transmitted visual ranges (4);
- predetermining an expected change (12) in visual obstruction at the position (2) on the basis of a change in the building density, wherein the change in building density is retrieved from a database; and
- adjusting the visual range (4) in the visual range collection (9) on the basis of the predetermined change (12) in visual obstruction.

2. Method according to Claim 1,
**characterized in that**
a change in building density at the position (2) is predetermined as the change (12) in visual obstruction, and the visual range (4) in the visual range collection (9) is adjusted on the basis of the change in building density.

3. Method according to one of the preceding claims,
**characterized in that**
a quality value (10) for the visual range (4) is determined, which quality value (10) describes a current environmental status of the motor vehicle (1) while the visual range (4) has been determined, and the quality value (10) is stored with the visual range (4) in the visual range collection (9).

4. Method according to Claim 3,
**characterized in that**
the visual range (4) in the visual range collection (9) is replaced by a further visual range (11) in accordance with the quality value (10).

5. Method according to one of the preceding claims,
**characterized in that**
the adjusted visual range (4) from the visual range collection (9) is transmitted to a further motor vehicle (13).

6. Method according to Claim 5,
**characterized in that**
the further motor vehicle (13) performs an overtaking maneuver in accordance with the visual range (4).

7. Method according to one of the preceding claims,
**characterized in that**
the visual range collection (9) with respective visual ranges (4) is generated by a swarm (15) of vehicles with a plurality of motor vehicles (1).

8. Method according to one of the preceding claims,
**characterized in that**
the visual range (4) in the visual range collection (9) is adjusted by means of machine learning.

9. Method according to one of the preceding claims,
**characterized in that**
the visual range (4) in the visual range collection (9) can be adjusted on the basis of rules that use data from weather databases.

10. Visual range collecting device (8) with a visual range collection (9), which visual range collecting device (8) is generated by a method according to one of the preceding claims.

## Revendications

1. Procédé de génération d'une collection de visibilités dégagées (9), procédé dans lequel les étapes suivantes sont réalisées :
- déterminer une position actuelle (2) d'au moins un véhicule automobile (1) ;
- déterminer une visibilité dégagée actuelle (4) qui décrit jusqu'où un conducteur du véhicule automobile (1) peut voir une route devant lui (3) à la position actuelle (2) ;
- transmettre la visibilité dégagée (4) du véhicule automobile (1) à un dispositif de collecte de visibilités dégagées (8) ;
- générer la collection de visibilités dégagées (9) sur la base des visibilités dégagées (4) transmises ;
- prédéterminer une visibilité altérée attendue (12) à la position (2) sur la base d'un ensemble de constructions modifié, l'ensemble de constructions modifié étant récupéré d'une base de données ; et
- adapter la visibilité dégagée (4) dans la collection de visibilités dégagées (9) sur la base de la visibilité altérée prédéterminée (12).

2. Procédé selon la revendication 1,
**caractérisé en ce que**
un ensemble de constructions modifié à la position (2) est prédéterminé comme visibilité altérée (12), et la visibilité dégagée (4) dans la collection de visibilités dégagées (9) est adaptée sur la base l'ensemble de constructions modifié.

3. Procédé selon l'une des revendications précédentes,
**caractérisé en ce que**
une valeur de qualité (10) est déterminée pour la visibilité dégagée (4) qui décrit un état d'environnement actuel du véhicule automobile (1) lors de la détermination de la visibilité dégagée (4), et la valeur de qualité (10) avec la visibilité dégagée (4) est mémorisée dans la collection de visibilités dégagées (9).

4. Procédé selon la revendication 3,
**caractérisé en ce que**
la visibilité dégagée (4) dans la collection de visibilités dégagées (9) est remplacée par une autre visibilité dégagée (11) en fonction de la valeur de qualité (10).

5. Procédé selon l'une des revendications précédentes,
**caractérisé en ce que**
la visibilité dégagée (4) adaptée est transmise de la collection de visibilités dégagées (9) à un autre véhicule automobile (13).

6. Procédé selon la revendication 5,
**caractérisé en ce que**
l'autre véhicule automobile (13) effectue un processus de dépassement en fonction de la visibilité dégagée (4).

7. Procédé selon l'une des revendications précédentes,
**caractérisé en ce que**
la collection de visibilités dégagées (9) est générée avec des visibilités dégagées respectives (4) par un essaim de véhicules (15) comprenant plusieurs véhicules automobiles (1).

8. Procédé selon l'une des revendications précédentes,
**caractérisé en ce que**
la visibilité dégagée (4) dans la collection de visibilités dégagées (9) est adaptées à l'aide d'un apprentissage par machine.

9. Procédé selon l'une des revendications précédentes,
**caractérisé en ce que**
la visibilité dégagée (4) dans la collection de visibilités dégagées (9) peut être adaptées sur la base de règles qui utilisent des données provenant de bases de données météorologiques.

10. Dispositif de collecte de visibilités dégagées (8) comprenant une collection de visibilités dégagées (9) qui est générée par un procédé selon l'une des revendications précédentes.
